(19) Europäisches Patentamt
European Patent Office
Office européen des brevets

(11) Veröffentlichungsnummer: **0 312 120 B1**

(12) # EUROPÄISCHE PATENTSCHRIFT

(45) Veröffentlichungstag der Patentschrift: **04.03.92**

(51) Int. Cl.[5]: **C08F 220/14**, G11B 7/26, //(C08F220/14,220:30,220:18, 212:06)

(21) Anmeldenummer: **88117643.2**

(22) Anmeldetag: **24.12.83**

(60) Veröffentlichungsnummer der früheren Anmeldung nach Art. 76 EPÜ: **0 115 066**

(54) **Verfahren zur Herstellung von Acrylharz-Formmasse mit geringer Wasseraufnahme.**

(30) Priorität: **30.12.82 DE 3248602**

(43) Veröffentlichungstag der Anmeldung:
**19.04.89 Patentblatt 89/16**

(45) Bekanntmachung des Hinweises auf die Patenterteilung:
**04.03.92 Patentblatt 92/10**

(84) Benannte Vertragsstaaten:
**DE FR GB IT NL**

(56) Entgegenhaltungen:
**DE-A- 2 053 901**
**GB-A- 2 089 523**

**PATENT ABSTRACTS OF JAPAN, Band 7, Nr. 160 (P-210)[1305], 14. Juli 1983; & JP-A-58 68 253 (KANEGAFUCHI KAGAKU KOGYO K.K.) 23-04-1983**

(73) Patentinhaber: **Röhm GmbH**
**Kirschenallee Postfach 4242**
**W-6100 Darmstadt 1(DE)**

(72) Erfinder: **Wenzel, Franz, Dr.**
**Zeyherweg 5**
**W-6100 Darmstadt(DE)**
Erfinder: **Arndt, Peter Joseph, Dr.**
**Im Säbchen 9**
**W-6104 Seeheim-Jugenheim 2(DE)**
Erfinder: **Siol, Werner, Dr.**
**Goerdelerweg 34**
**W-6100 Darmstadt-Eberstadt(DE)**

EP 0 312 120 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft ein Verfahren zur Herstellung von Acrylharz-Formkörpern mit geringer Wasseraufnahme. Die Wasseraufnahme von Acrylharzen kann durch die wasserhaltige Atmosphäre oder durch sonstige Kontakte mit Wasser erfolgen. Die Wasseraufnahme hängt bei Acrylgläsern von materialbedingten Faktoren (wie Sättigungskonzentration und Diffusionskonstante) und umweltbedingten Faktoren (Geometrie des betreffenden Gegenstandes, Konzentration und Druck des feuchten Mediums, Lagerungszeit und Temperatur) ab.

Hinsichtlich der mechanischen Eigenschaften der Acrylharze übt Wasser eine gewisse Weichmacherwirkung aus. Zug- und Biegefestigkeit sowie E-Modul nehmen etwas ab, dagegen werden Schlagzähigkeit und Biegewinkel erhöht. In der traditionellen Verarbeitungstechnologie konnte jedoch der Einfluß des Wassers auf die physikalischen Eigenschaften von Acrylharzen ohne weiteres in Kauf genommen werden. So wird in Vieweg-Esser, Kunststoff-Handbuch, Band IX, "Polymethacrylate", Hanser-Verlag 1975, Seite 425, festgestellt:
"Da die Wasseraufnahme von Polymethylmethacrylat vor allem bei Temperaturen unter 100 Grad C im Verhältnis zu manchen anderen Kunststoffen, wie Polyamid oder Celluloseacetat, verhältnismäßig klein ist, bewegen sich die meisten physikalischen Eigenschaftsänderungen bei Acrylgläsern in engen, in der praktischen Anwendung häufig gar nicht mehr wahrzunehmenden Grenzen."

Stand der Technik

In der US-PS 2 477 293 aus dem Jahre 1947 werden den Polymeren und Copolymeren aus Aryl- und substituierten Arylacrylaten und -methacrylaten Fluidität, Elastizität, Plastizität, Zugfestigkeit, Wirkung als elektrischer Widerstand, Beständigkeit gegen Wasser, organische Flüssigkeiten und Gase, Transparenz usw. zugeschrieben. Eine Lehre zum technischen Handeln in diesem Sinne liegt indessen nicht vor.

In der US-PS 2 129 685 aus dem Jahre 1934 werden Copolymere aus Phenylestern der Methacrylsäure und polymerisierbaren Derivaten der Acryl- oder der Methacrylsäure beansprucht. Erwähnt werden ferner Gemische aus PMMA und Polymerisaten bzw. Copolymerisaten von Phenylestern der Acryl- bzw. der Methacrylsäure.

Feste Copolymerisate aus 1 - 25 Gew.-% an Alkoxyphenylmethacrylaten und -acrylaten und monoäthylenisch ungesättigten Monomeren wie z.B. Methylmethacrylat, Styrol, Vinylacetat u.a. sind Teil der Lehre der US-PS 3 409 589.

Aus der JP-OS 78 34 853 (vgl. Chem. Abstr. 89, 130345q) sind thermoplastische Harze auf der Basis von 40 bis 99 % Polycarbonat, 1 bis 60 Gew.-% eines Vinylcopolymeren gebildet aus 60 bis 98 % vinylaromatischen Monomeren, 2 bis 40 % Aralkyl- oder Naphthyl(meth)acrylaten, 0 bis 3 % polyfunktionellen Monomeren und 0 bis 1 % Allylmonomeren bekannt.

Die Acrylharze des Standes der Technik konnten die an sie gerichteten Anforderungen weitgehend erfüllen. Probleme traten gelegentlich auf, wenn Wasser auf relativ dünnes Material ungleichmäßig einwirken konnte, z.B. bei Aquarien mit zu dünnen Materialstärken. Bekanntlich kann das Matmerial auf ungleichmäßige Wasseraufnahme bzw. die Ausbildung eines Feuchtigkeitsgradienten mit Verziehen oder Durchbiegen reagieren.

In der DE-A 30 28 498 wird auf die Probleme hingewiesen, welche die Ausbildung eines Feuchtigkeitsgradienten bei optisch abzulesenden Informationsspeicherplatten auf Basis von PMMA hervorruft. Die genannte DE-A löst das Problem dadurch, daß bei der Umformung und den anschließenden Bearbeitungsschritten die Wasseraufnahme des PMMA minimiert wird.

Die unerwünschten Wirkungen einer uneinheitlichen Wasseraufnahme bei Informationsspeicherplatten ("Regenschirmeffekt") stehen auch im Mittelpunkt der US-PS 4 310 919. Die Lösung des Problems sieht die US-PS in der völlig symmetrischen Gestaltung der Informationsspeicherplatten.

Die vorgeschlagenen Lösungen sind erkennbar darauf gerichtet, die Ausbildung eines Feuchtigkeitsgradienten zu verhindern bzw. seine Wirkung intern zu kompensieren.

Es bestand demnach weiterhin die Aufgabe, ein Material zur Verfügung zu stellen, dessen optische und mechanische Qualitäten den stringenten Anforderungen an Informationsspeicherplatten (insbesondere optisch abzulesenden Informationsspeicherplatten) erfüllen, bei dem andererseits die aus der ungleichmäßigen Wasseraufnahme resultierenden Probleme nicht mehr auftreten bzw. keine Rolle mehr spielen. Die technische Eignung als Datenträger beruht nicht zuletzt auf der Anwendbarkeit moderner Fertigungsverfahren wie Extrusion, Spritzgießen oder Verpressen von Formmasse.

Lösung

Die vorliegende Erfindung betrifft ein Verfahren zur Herstellung von Acrylharz-Formkörpern mit geringem Wasseraufnahmevermögen durch Extrusion, Spritzgießen oder Verpressen von Acrylharz-Formmasse wobei die Acrylharzformmasse ein Polymer darstellt, das aus mindestens drei verschiedenen Comonomer-Gruppen aufgebaut ist, die aus den Typen A) bis D) und gegebenenfalls weiteren Monomeren der Typen E) und/oder F) und/oder G) ausgewählt sind, wobei

A) Methylmethacrylat
in Anteilen von 20 bis 85 Gew.-%.

B) ein oder mehrere Monomere der Formel I

$$CH_2 = \overset{R'}{\overset{|}{C}} - COO - (\underset{R''}{\underset{|}{C}}H)_n - (O)_m - Ar \qquad I$$

worin

| | |
|---|---|
| R′ | für Wasserstoff oder Methyl |
| R″ | für Wasserstoff oder einen Alkylrest mit 1 bis 7 Kohlenstoffatomen |
| Ar | für einen aromatischen Kohlenwasserstoff |
| n | n eine Zahl von 1 bis 6 |
| m | für 0 oder 1, mit der Maßgabe, daß n und m nicht gleichzeitig 1 sein sollen in Anteilen von 0 bis 50 Gew.-% und |

C) ein oder mehrere Monomere der Formel II

$$CH_2 = \overset{CH_3}{\overset{|}{C}} - COOR''' \qquad II$$

worin

| | |
|---|---|
| R‴ | für einen gegebenenfalls verzweigten Kohlenwasserstoffrest mit 2 bis 20 Kohlenstoffatomen oder einen cyclischen nichtaromatischen Kohlenwasserstoffrest mit bis zu 12 Kohlenstoffatomen und mindestens 5 Ringkohlenstoffatomen in Anteilen von 0 bis 60 Gew.-%, |

D) Styrol und/oder -Methylstyrol in Anteilen von 0 bis 40 Gew.-% und

E) 4-Methylstyrol in Anteilen von 0 bis 9,9 Gew.-% F) gegebenenfalls weitere Comonomere, deren Löslichkeit den Wert 50 g Monomer pro Liter Wasser bei 25 Grad C nicht überschreitet, und

G) gegebenenfalls weitere, die Polymerkohäsion fördernde Comonomere

bedeutet. Die Summe der Monomeren A) - G) steht für 100 Gew.-%. Bei den Acrylharzformmassen gemäß den Ansprüchen handelt es sich um Polymerisate aus mindestens drei Monomergruppen (Terpolymer) vorzugsweise mit ausgeprägten Anteilen an aromatische Reste enthaltenden Monomeren. Die Anteile der entsprechenden Monomergruppen werden dabei so gewählt, daß die üblicherweise bei aromatischen Monomerbausteinen beobachteten Ordnungsstrukturen - hervorgerufen durch die Tendenz der aromatischen Gruppe zur Assoziation - weitgehend unterdrückt werden.
Die Acrylharze der vorliegenden Erfindung zeichnen sich dadurch aus, daß ihre Wasseraufnahme unter den Bedingungen von DIN 50015 den Wert 1,0 Gew.-%, vorzugsweise 0,8 Gew-%, nicht überschreitet.

Als besonders überraschend muß betrachtet werden, daß die mechanischen und ganz besonders die optischen Eigenschaften des erfindungsgemäß zu verwendenden Polymersystems sogar den hochgesteckten Anforderungen an optisch abzulesenden Informationsspeicherplatten genügen. Dies gilt vor allem hinsichtlich der Doppelbrechung, die üblicherweise den Einsatz aromatische Gruppen enthaltender Monomerer, z.B. des Styrols selbst, stark begrenzt. Da besonders die Verarbeitungsbedingungen die Doppelbrechung der Proben in hohem Maße bedingen, ist darauf hinzuweisen, daß die erfindungsgemäßen, aus mindestens drei Monomergruppen aufgebauten Polymere so gestaltet werden können, daß diese Polymerisate zu Formkörpern spritzgegossen werden können, ohne daß Produkte mit einer unzulässig hohen Doppelbrechung (z.B. Gangunterschied $\Delta n > 100$ nm) resultieren. Ebenso ist die Extrusion dieser Formmassen möglich.

Bei der Auswahl der Comonomeren aus den einzelnen Monomergruppen ist darauf zu achten, daß der

Anteil der Monomeren der Monomergruppen B) bis E) so groß zu wählen ist, daß das daraus hergestellte Polymerisat die gewünschte, niedrige Wasseraufnahme, z.B. < 1,0 % aufweist. Alle diese Monomeren der Gruppe B) bis E) tragen zur Verringerung der Wasseraufnahme des Methylmethacrylatpolymeren bei. Dabei ist es in der Regel so, daß die aromatische Gruppen enthaltenden Monomeren der Gruppen D) und E) die Wasseraufnahme des Polymerisates besonders stark erniedrigen. Ihr Anteil ist jedoch so zu bemessen, daß die Doppelbrechung nicht über den gewünschten Wert, z.B. 50 nm, ansteigt. Um zu Polymerisaten mit der erforderlichen geringen Wasseraufnahme zu gelangen, sind daher weitere Monomere z.B. vom Typ C) zu copolymerisieren. Es wurde nun gefunden, daß im allgemeinen bei Copolymerisation von aromatischen Monomeren, z.B. von Styrol, mit zwei verschiedenen Comonomeren, z.B. mit Comonomeren der Gruppe A) und der Gruppe C) Polymerisate mit einer geringeren Tendenz zur Ausbildung von doppelbrechenden Strukturen erhalten werden als bei Copolymerisation mit Methylmethacrylat (Monomergruppe A)) allein.

Die erfindungsgemäß zu verwendenden Terpolymeren zeichnen sich also - bei gleichem Anteil an aromatischen Gruppen - im allgemeinen nicht nur durch ein vermindertes Wasseraufnahmevermögen, sondern auch durch eine geringere Doppelbrechung aus (jeweils im Vergleich zu rein binären Copolymeren, z.B. des Methylmethacrylats (Gruppe A) mit Styrol (Gruppe D)). Wenn die Monomeren der Gruppe D) im Polymerisat vorhanden sind, kann als Richtwert > 0,5 und < 49 Gew.-% gelten. Vorteilhaft ist die Verwendung von Monomeren der Gruppe B). Diese Monomeren verleihen dem Polymerisat eine geringere Wasseraufnahmefähigkeit, verursachen aber andererseits nicht die hohe Tendenz zur Ausbildung von doppelbrechenden Strukturen, wie es z.B. vom Styrol bekannt ist.
Der Anteil dieser Monomeren vom Typ B) sollte jedoch im allgemeinen unter 50 Gew.-%, bezogen auf die Gesamtmonomeren liegen, insbesondere bei 5 bis 40 Gew % insbesondere jedoch unter 30 Gew.-%. Soweit sie im Polymer vorhanden sind, seien als Richtwerte > 1 und < 30 Gew.-% genannt. Als begrenzender Faktor für den Einsatz größerer Anteile an Monomeren der Gruppe B) ist vor allem die Erniedrigung der Glastemperatur Tg der Polymeren durch diese Monomeren anzusehen. Als besonders bevorzugte Vertreter der Monomerengruppe B) sind daher auch vor allem die Ester der Methacrylsäure zu nennen, da diese im Vergleich zu den Estern der Acrylsäure eine höhere Glastemperatur aufweisen. Von besonderer praktischer Bedeutung sind die Verbindungen der Formel I, in denen Ar für einen, gegebenenfalls substituierten Phenylrest steht. Als Substituenten sind besonders Alkylreste mit 1 bis 4 Kohlenstoffatome oder die entsprechenden Äther zu nennen.

Insbesondere genannt seien 2-Phenoxyäthylmethacrylat, Benzylmethacrylat, 2-Phenyläthylmethacrylat, 3-Phenylpropylmethacrylat und 1-Phenyläthylmethacrylat.

Der Einsatz größerer Anteile (z.B. > 9,9 Gew.-%) der Monomeren der Gruppe E) = p-Methylstyrol ist **nicht** Gegenstand der vorliegenden Anmeldung, da für den Einsatz dieser Monomeren besondere Gesetzmäßigkeiten gelten.

Als Monomere vom Typ C) kommen vor allem solche Monomeren in Betracht, die die Glastemperatur der Polymeren nicht zu stark erniedrigen, dem Polymerisat aber eine geringere Wasseraufnahme verleihen. Es sind dies die Ester der Formel II, wobei $R'''$ für einen gegebenenfalls verzweigten Kohlenwasserstoffrest mit 2 bis 20 Kohlenstoffatomen oder einen cyclischen nicht-aromatischen Kohlenwasserstoffrest mit bis zu 12 Kohlenstoffatomen und mindestens 5 Ringkohlenstoffatomen steht. Insbesondere seien genannt: Isopropylmethacrylat, Cyclohexylmethacrylat, die verschiedenen Butylmethacrylate sowie n-Propylmethacrylat und Cyclohexylmethacrylat. Der Anteil dieser Monomeren sollte in der Regel unter 60 Gew.-%, bezogen auf das Gesamtpolymerisat, liegen. Soweit sie im Polymerisat vorhanden sind, seien als Richtwerte ein Gehalt von >1 und <60 Gew.-% genannt.

Unter den gegebenenfalls vorhandenen Monomeren vom Typ F sind A - E verschiedene Monomere mit einer Löslichkeit von < 50 g Monomer pro Liter Wasser bei 25 Grad C zu verstehen. Es sollen darunter an sich bekannte, radikalisch polymerisierbare Monomere verstanden sein. Vorzugsweise fallen sie unter die allgemeine Formel III

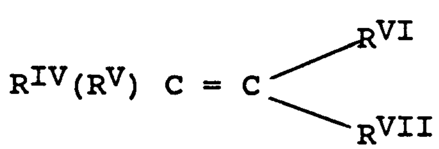

III

worin
$R^{IV}$ und $R^{V}$ für Wasserstoff oder Chlor
$R^{VI}$ für Wasserstoff oder Methyl
$R^{VII}$ für Wasserstoff oder einen Rest $-CH_3$, $-CH=CH_2$, $-CCl=CH_2$,

$$-O-\overset{\overset{O}{\|}}{C}-R^{VIII},$$

wobei $R^{VIII}$ einen Alkylrest mit 2 bis 14 Kohlenstoffatomen bedeutet, steht oder

worin

$R^{IV}$ zugleich mit $R^{VI}$ oder $R^{VII}$ für einen Rest $-COOR^{IX}$ steht, wobei $R^{IX}$ einen Alkylrest mit 1 bis 6 Kohlenstoffatomen bedeutet und die übrigen Reste die oben genannten Bedeutungen beibehalten, oder

worin

$R^{VI}$ für einen Rest $-COOR^{IX}$ und $R^{VII}$ für einen Rest $-CH_2COOR$ steht und die übrigen Reste die genannten Bedeutungen beibehalten.

Insbesondere seien als Monomeren vom Typ F) Olefine wie Butadien, Isopren, Isobutylen, Ester wie Itacon-, Malein-und Fumarsäureester, insbesondere deren Methyl- und Ethylester, ferner Vinylidenchlorid sowie Vinylester von Carbonsäuren mit mehr als 2 Kohlenstoffatomen genannt. Ihr Anteil liegt bei 0 - 30 Gew.-%, vorzugsweise bei 0 - 10 Gew.-%, bezogen auf das Gesamtpolymerisat. Soweit sie im Polymerisat vorhanden sind, sei als Richtwert ein Gehalt von $> 5$ Gew.-% und $> 30$ Gew.-% genannt. Darüber hinaus können zu geringen Anteilen, nicht unter A) - E) fallende, die Polymerkohäsion fördernde Monomere enthalten sein. [Typ G)]. Im allgemeinen liegt ihr Anteil im Bereich 0,1 bis wenigstens 10 Gew.-%.

Genannt seien beispielsweise Acrylnitril und Methacrylnitril, ferner vernetzende Monomere, d.h. Verbindungen, die mehr als eine radikalisch polymerisationsfähige Einheit im Molekül besitzen. Genannt seien z.B. Divinylbenzol, Acryl- und Methacrylester von Polyolen, beispielsweise Butandioldimethacrylat, ferner Vinyl-, Allyl- und Crotylester der Acryl- und der Methacrylsäure. (Vgl. H. Rauch-Puntigam, T.Völker in "Acryl- und Methacrylverbindungen", Springer-Verlag, 1967, S. 184 - 185).

Die Verwendung der Monomeren des Typs G) ist zum Beispiel von Vorteil, wenn das Polymerisat gegen organische Lösungsmittel stabilisiert werden soll.

Neben den genannten Mengen an Monomeren des Typs A), sollten wenigstens 10 Gew.-% an Monomeren des Typs B) und wenigstens 10 Gew.-% an Monomeren des Typs C) vorhanden sein.

Neben der genannten Menge an Monomeren des Typs A) sollten wenigstens 10 Gew.-% an Monomeren des Typs C) und wenigstens 5 Gew.-% an Monomeren des Typs D) vorhanden sein.

Neben der genannten Menge an Monomeren des Typs A) sollten wenigstens 5 Gew.-% an Monomeren des Typs B), wenigstens 5 Gew.-% an Monomeren des Typs C) und wenigstens 5 Gew.-% an Monomeren des Typs D) vorhanden sein.

Die Bestimmung der Wasseraufnahme der Copolymerisate wird in der Regel am besten an den daraus hergestellten Formkörpern, z.B. der optischen Speicherplatte, durchgeführt. Für einen einfachen und schnellen Zugang zu Daten über das Wasseraufnahmevermögen der gewünschten Copolymeren empfiehlt sich jedoch die Messung der Wasseraufnahme an einer oberflächenreichen Probe, z.B. an einem gemahlenen Substanzpolymerisat oder an einem Perlpolymerisat. Die Wasseraufnahme wird in diesem Fall an einer zuvor bis zur Gewichtskonstanz (z.B. 24 Stunden bei 60 Grad C) getrockneten Probe ermittelt. Die Wasseraufnahme kann dabei einfach als Gewichtszunahme gemessen werden. Die Messung erfolgt in einem Normklima DIN 50 015 (feucht)], 23 Grad C bei 83 % relativer Luftfeuchtigkeit und nach 24 Stunden, da dieser Zeitraum auf jeden Fall Konstanz der Wasseraufnahme gewährleistet.

Nach 24 Stunden Lagerung in diesem Normklima kann die Wasseraufnahme zusätzlich durch Karl-Fischer-Titration bestimmt werden. In der Regel stimmen Gewichtszunahme und Karl-Fischer-Werte gut überein (siehe auch Tab. 1).

Nach vorliegenden praktischen Erfahrungen bei kleinen bzw. oberflächenreichen Polymerisat-Proben, wird die Sättigungskonzentration im Normklima schon nach 6 Stunden erreicht.

Die Messung der Doppelbrechung wird an z.B. ca. 1 mm dicken Spritzplättchen durchgeführt. Die in Tabelle I angegebenen Werte sind als orientierende Größen anzusehen, da die Doppelbrechung bekanntlich in erheblichem Maße von der Verarbeitungstechnik abhängt.

Es wird jedoch deutlich sichtbar, daß durch Übergang von einem binären Copolymeren zu einem Terpolymeren die Doppelbrechung erniedrigt wird. So zeigt ein Copolymerisat aus 20 Teilen Styrol und 80 Teilen Methylmethacrylat eine Doppelbrechung von 126 nm. Ein unter gleichen Bedingungen hergestelltes Spritzplättchen der Zusammensetzung: 20 Teile Styrol, 20 Teile Cyclohexylmethacrylat, 60 Teile Methylmethacrylat, besitzt dagegen nur eine Doppelbrechung von 70 nm. Es ist also möglich, durch die Verwendung von mehr als zwei Monomerbausteinen Copolymere mit verminderter Orientierbarkeit aufzubauen und so die Ausbildung von doppelbrechenden Strukturen zu erschweren.

Die Acrylharz-Formkörper bieten sich für eine Reihe von Anwendungen an, insbesondere solchen, bei denen eine geringe Wasseraufnahme, gekoppelt mit geringer Doppelbrechung und guten sonstigen optischen und mechanischen Eigenschaften erforderlich sind.
Wie bereits erwähnt, gelten diese Anforderungen besonders fur Träger optisch abzulesender Information, insbesondere optischer Speicherplatten. So ist darauf zu achten, daß die Doppelbrechung der als optischer Datenspeicher verwendeten Platten - bei einer Schichtdicke von 1 mm - z.B. 100 nm nicht überschreiten sollte. Besonders bevorzugt sind Datenspeichermaterialien mit einer Doppelbrechung von weniger als 30 nm. Speziell genannt sei die Herstellung derartiger Informationsträger, insbesondere optischer Speicherplatten. Die Acrylharz-Formmassen eignen sich in hervorragender Weise auch zur Herstellung von Datenspeicherplatten, speziell der unter der Bezeichnung DOR (Digital Optical Recording) bekannten Typen. Die Speicherdichte bei derartigen Platten ist gewöhnlich sehr hoch, sie kann z.B. im Bereich von $10^9$ - $10^{11}$ bits liegen. Die vorliegende Erfindung bietet die Möglichkeit, derartige Informationsspeicherplatten durch Extrusion oder insbesondere durch Spritzgießen herzustellen.
Die Monomerenzusammensetzung sollte so gewählt werden, daß die Vicat-Erweichungstemperatur der Copolymeren nach DIN 53 460 größer als 70 Grad C, insbesondere jedoch größer als 80 Grad C beträgt.

Herstellung der Polymerisate

Die erfindungsgemäßen Polymerisate werden durch radikalische Polymerisation nach an sich bekannten Verfahren hergestellt.

Die Polymerisation der erfindungsgemäßen Copolymerisate aus mindestens 3 Monomerklassen kann prinzipiell mittels der bekannten Polymerisationsverfahren durchgeführt werden. Insbesondere bietet sich die radikalische Polymerisation an. Die Polymerisation kann in Substanz, in Suspension, in Emulsion oder in Lösung erfolgen.

Die Isolierung der Polymerisatfeststoffe erfolgt bei der Polymerisation in Suspension, z.B. durch einfaches Abfiltrieren der Perlen mit nachfolgendem Waschen und Trocknen, bei der Polymerisation in Emulsion, z.B. durch Fällung, Gefrierkoagulation oder durch Sprühtrocknung. Die Gewinnung des Polymerisatfeststoffs aus der Lösungspolymerisation kann z.B. durch Ausfällen in einem Nicht-Lösungsmittel, z.B. Methanol, erfolgen. In der Regel erfolgt die Polymerisation mittels radikalischer Initiatoren, z.B. mittels organischer Peroxide und Perester wie z.B. Dibenzoylperoxid bzw. t-Butyl-per-2-Ethyl-hexanoat oder aber durch Azoverbindungen, wie z.B. Azzo-iso-butyronitril u.a. Initiatoren mehr. Die Polymerisationstemperatur richtet sich dabei nach der Zerfallgeschwindigkeit der Initiatoren. Zur Einstellung des Molekulargewichts wurden im allgemeinen Polymerisationsregler, z.B. t-Dodecylmercaptan, 2-Ethylhexylthioglykolat u.a. mehr verwendet. Ganz allgemein kommen die Polymerisationsverfahren zur Anwendung, wie sie für Methylmethacrylat und dessen Copolymerisation mit anderen Monomeren bekannt sind. Vgl. auch Houben-Weyl, Methoden der Organischen Chemie, 4. Auflage, Band 14/1.

Herstellung von Formkörpern als Träger optisch abzulesender Information

Erfindungsgemäß wird die Herstellung der Formkörper durch Spritzguß oder aber durch Extrusion und anschließendes Herauslösen des Formkörpers erfolgen. Darüber hinaus sind auch gepreßte Formteile herstellbar. Damit ergibt sich ein Verarbeitungsprofil der Formmasse. Während das Polymerisat einerseits gut zu verarbeiten sein sollte - was ein möglichst kleines Molekulargewicht bedingt - sollte der Polymerisationsgrad ein gewisses Mindestmaß nicht unterschreiten, da das Material dann zu spröde wird. In der Regel sind daher Molekulargewichte von > 50 000, insbesondere von > 70 000 erforderlich. Dabei ist jedoch darauf zu achten, daß besonders beim Einsatz der Massen in der Extrusion oder im Spritzguß, die Molekulargewichte nicht zu groß werden sollten (z.B. $M = 1 . 10^6$), da dann verstärkt Doppelbrechung auftreten kann. Speziell für die Anwendung als optisch abzulesendes Datenspeichermaterial ist eine minimale Lichtdurchlässigkeit erforderlich. Diese richtet sich naturgemäß nach der z.B. zum Abruf der gespeicherten Daten verwendeten Lichtart. Es ist demnach selbstverständlich, daß das zugrundeliegende Material eine äußert geringe Eigenabsorption haben sollte. Ganz allgemein kann gesagt werden, daß die Lichtdurchlässigkeit des Materials - gemessen an einer 1 mm dicken Platte - 80 %, insbesondere 85 % insbesondere 90% überschreiten sollte. Die Lichtdurchlässigkeit wird dabei nach DIN 5036 bestimmt.

Ebenfalls hohe Anforderungen werden hinsichtlich der Doppelbrechung gestellt. So ist darauf zu achten, daß die Doppelbrechung der als optischer Informationsspeicher verwendeten Platten - bei einer Schichtdicke von I mm - z.B. 100 nm nicht überschreiten sollte, besonders bevorzugt sind Datenspeichermaterialien mit einer Doppelbrechung von weniger als 30 nm.

Die folgenden Beispiele dienen der Erläuterung der Erfindung, sollen jedoch keine Einschränkung

darstellen.

BEISPIELE

Beispiel 1

Polymerisation in Perlform

Für die Perlpolymerisation der Methylmethacrylat-haltigen MOnomergemische gelten die Angaben in Houben-Weyl, Methoden der organischen Chemie, 4. Auflage, Band 14/1, Verlag Chemie. Außer hochmolekulare Dispergatoren z.B. Polyvinylalkohol oder styrolmaleinsaures Natrium kommen auch Pulverdispergatoren in Frage, z.B. in situ erzeugtes Aluminiumhydroxid. (Vgl. hierzu auch die deutsche Patentanmeldung P 31 50 730 vom 22.12.1981 und Houben-Weyl, loc.cit oben, pp. 406 - 429).

So wird in einem Ansatz mit 1000 ml destilliertem Wasser, enthaltend einen der oben genannten Dispergatoren, eine Monomer-, Regler-, Initiatormischung bestehen aus
300 g Methylmethacrylat
100 g 2-Phenoxyäthylmethacrylat
50 g Cyclohexylmethacrylat
50 g Styrol
4 g Benzoylperoxid (70 %ig)
3 g 2-Ethylhexylthioglykolat
3 Stunden bei 80 bis 85 Grad C gerührt. Danach wird 2 Stunden bei 90 Grad C weitergerührt.

Nach Beendigung der Polymerisation wird gekühlt, das Perlpolymerisat mit destilliertem Wasser gewaschen und getrocknet. Es resultieren gut rieselfähige, klare Perlpolymerisate. Die Wasseraufnahme des Polymerisates kann vorteilhaft direkt an den Perlen durchgeführt werden.
Zur Herstellung von Spritzgußplatten wird aus den Perlen zuvor ein Gleichkorngranulat hergestellt. Auch für die Herstellung von Extrudaten wird von einem Gleichkorngranulat ausgegangen. Charakterisierung des Polymerisats siehe Tab. 1. Die Vicat-Erweichungstemperatur (nach DIN 53 460) liegt bei 85 Grad C.

Beispiel 2

Man verfährt wie in Beispiel 1, wählt jedoch eine andere Monomerenzusammensetzung:
300 g Methylmethacrylat
100 g Cyclohexylmethacrylat
100 g 3-Phenylpropylmethacrylat
4 g Benzolyperoxid (70 %ig)
3 g 2-Ethylhexylthioglykolat
Wasseraufnahme und Doppelbrechung der Spritzplättchen siehe Tab. 1. Die Vicat-Erweichungstemperatur liegt bei 84 Grad C. die Lichtdurchlässigkeit im Bereich 500 - 700 nm ist < 90 %. (Messung an einem 3 mm dicken Probeplättchen).

Beispiel 3

Man verfährt wie in Beispiel 1 und 2, wählt jedoch eine andere Monomerenzusammensetzung:
375 g Methylmethacrylat
100 g 3-Phenylproplymethacrylat
25 g Isobutylmethacrylat
4 g Benzoylperoxid (70 %ig)
3 g 2-Ethylhexylthiglykolat
Die Vicat-Erweichungstemperatur liegt bei 81 Grad C. Die Lichtdurchlässigkeit im Bereich 500 - 700 nm ist > 90 %.

Beispiel 4

Man verfährt wie in Beispiel 1 - 3, wählt jedoch eine anderen Monomerenzusammensetzung und verlängert die Reaktionszeit auf 7 Stunden.
300 g Methylmethacrylat
100 g Styrol

100 g Cyclohexylmethacrylat
5 g Benzoylperoxid (70%ig)
3 g 2-Ethylthioglykolat
Vicat-Erweichungstemperatur: 100 Grad C., Lichtdurchlässigkeit im Bereich 500 - 700 nm ist > 85 %.

Beispiel 5

Vergleichsbeispiel

Man verfährt wie in Beispiel 4, wählt jedoch nur eine binäre Monomerenmischung
400 g Methylmethacrylat
100 g Styrol
5 g Benzoylperoxid (70 %ig)
3 g 2-Ethylhexylthioglykolat
Man erhält gut rieselfähige, klare Perlpolymerisate. Die Doppelbrechung der daraus hergestellten Spritzplättchen liegt deutlich über den bei den Polymerisaten gemäß Beispiel 1 - 4 gefundenen Werten (siehe Tab. 1). Vicat-Erweichungstemperatur: 96 Grad C.

TABELLE 1

Charakterisierung der Polymeren gemäß Beispiel 1- 5

| Beispiel Nr. | Zusammensetzung der Polymerisate (Gew.-%) | | | | | | Wasseraufnahme *) (%) | | Dppelbrechung**) (nm) |
|---|---|---|---|---|---|---|---|---|---|
| | MMA | S | CMA | JBMA | POEMA | PMMA | grav. | KF | |
| 1 | 60 | 10 | 10 | - | 20 | - | 0,77 | 0,74 | 19 |
| 2 | 60 | - | 20 | - | - | 20 | 0,62 | 0,76 | 3 |
| 3 | 75 | - | - | 5 | - | 20 | 0,95 | 0,93 | 2 |
| 4 | 60 | 20 | 20 | - | - | - | 0,78 | 0,80 | 70 |
| 5***) | 80 | 20 | - | - | - | - | 1,03 | 1,04 | 126 |

MMA: Methylmethacrylat
S: Styrol
CMA: Cyclohexylmethacrylat
JBMA: Isobutylmethacrylat
POEMA: Phenoxyethylmethacrylat
PPMA: 3-Phenylpropylmethacrylat

*) Klima: DIN 50 015 (feucht), 23 Grad C / 83 % F
**) gemessen an einem 1 mm dicken Spritzplättchen
***) Vergleichsansatz mit nur zwei Comonomeren

## Patentansprüche

**1.** Verfahren zur Herstellung von Acrylharz-Formkörpern mit geringem Wasseraufnahmevermögen, durch Extrusion, Spritzgießen oder Verpressen von Acrylharz-Formmasse

dadurch gekennzeichnet,

daß die Acrylharzformmasse ein Polymer darstellt, das aus mindestens drei verschiedenen Comonomergruppen ausgewählt aus den Typen A) bis D) und gegebenenfalls weiteren Monomeren der Typen E) und/oder F) und/oder G) aufgebaut ist, wobei

A) Methylmethacrylat
in Anteilen von 20 bis 85 Gew.-%
B) ein oder mehrere Monomere der Formel I

$$CH_2 = \overset{R'}{\overset{|}{C}} - COO - (\underset{R''}{\underset{|}{CH}})_n - (O)_m - Ar \qquad I$$

worin

R′ für Wasserstoff oder Methyl

R″ für Wasserstoff oder einen Alkylrest mit 1 bis 7 Kohlenstoffatomen

Ar für einen aromatischen Kohlenwasserstoff

n eine Zahl von 1 bis 6

m für 0 oder 1, mit der Maßgabe, daß n und m nicht gleichzeitig 1 sein sollen

C) ein oder mehrere Monomere der Formel II

$$CH_2 = \overset{CH_3}{\overset{|}{C}} - COOR''' \qquad II$$

worin

R‴ für einen gegebenenfalls verzweigten Kohlenwasserstoffrest mit 2 bis 20 Kohlenstoffatomen oder einen cyclischen nichtaromatischen Kohlenwasserstoffrest mit bis zu 12 Kohlenstoffatomen und mindestens 5 Ringkohlenstoffatomen in Anteilen von 0 bis 60 Gew.-%

D) Styrol und/oder α-Methylstyrol in Anteilen von 0 bis 40 Gew.-% und

E) 4-Methylstyrol in Anteilen von 0 bis 9,9 Gew.-%

F) gegebenenfalls weitere Comonomere, deren Löslichkeit den Wert 50 g Monomer pro Liter Wasser bei 25 Grad C nicht überschreitet, und

G) gegebenenfalls weitere, die Polymerkohäsion fordernde Comonomere

bedeutet.

**2.** Verfahren gemäß Anspruch 1, dadurch gekennzeichnet, daß der Anteil der Monomeren vom Typ B) bei 5 bis 40 Gew.-% liegt.

**3.** Verfahren gemäß den Ansprüchen 1 und 2, dadurch gekennzeichnet, daß als Monomere des Typs B) solche aus der Gruppe 2-Phenoxyäthylmethacrylat, Benzylmethacrylat, 2-Phenyläthylmethacrylat, 3-Phenylpropylmethacrylat verwendet werden.

**4.** Verfahren gemäß den Ansprüchen 1 und 2, dadurch gekennzeichnet, daß sie neben den genannten Mengen an Monomeren des Typs A), wenigstens 10 Gew.-% an Monomeren des Typs B) und wenigstens 10 Gew.-% an Monomeren des Typs C) gleichzeitig enthalten.

**5.** Verfahren gemäß Anspruch 1, dadurch gekennzeichnet, daß sie neben der genannten Menge an Monomeren des Typs A) wenigstens 10 Gew.-% an Monomeren des Typs C) und wenigstens 5 Gew.-% an Monomeren des Typs D) gleichzeitig enthalten.

**6.** Verfahren gemäß den Ansprüchen 1 und 2, dadurch gekennzeichnet, daß sie neben der genannten Menge an Monomeren des Typs A) wenigstens 5 Gew.-% an Monomeren des Typs B), wenigstens 5 Gew.-% an Monomeren des Typs C) und wenigstens 5 Gew.-% an Monomeren des Typs D) gleichzeitig enthalten.

**7.** Verfahren gemäß den Ansprüchen 5 und 6, dadurch gekennzeichnet, daß als Comonomere vom Typ C) Cyclohexylmethacrylat verwendet wird.

**8.** Verfahren gemäß Anspruch 1, dadurch gekennzeichnet, daß die Wasseraufnahme der Acrylharz-Formmasse unter den Bedingungen der DIN 50 015 den Wert 1,0 Gew.-% nicht überschreitet.

**9.** Verfahren gemäß Anspruch 1, dadurch gekennzeichnet, daß die Acrylharz-Formmasse eine Vicat-Erweichungstemperatur nach DIN 53 460 von größer 70 Grad C besitzt.

**10.** Verfahren gemäß Anspruch 1, dadurch gekennzeichnet, daß die Acrylharz-Formmasse bei einer Schichtdicke von 1 mm eine Lichtdurchlässigkeit bei Einstrahlung des bei optischer Ablesung verwendeten Lichts > 80 %, vorzugsweise > 90 %, besitzt.

## Claims

**1.** A process for preparing acrylic resin mouldings with low water absorption by extrusion, injection moulding or compression of acrylic resin moulding composition, characterised in that the acrylic resin moulding composition is a polymer which is made up of at least three different comonomer groups selected from types A) to D) and optionally other monomers of types E) and/or F) and/or G, wherein

A) represents methyl methacrylate in amounts of from 20 to 85 wt. %,
B) represents one or more monomers of formula I

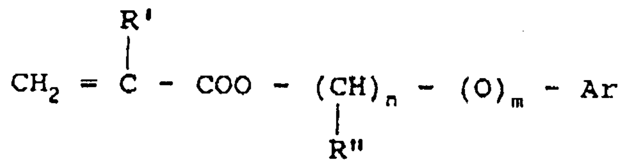

(I)

wherein
R' represents hydrogen or methyl
R" represents hydrogen or a $C_{1-7}$ alkyl group
Ar represents an aromatic hydrocarbon
n represents a number from 1 to 6
m represents 0 or 1, with the proviso that n and m cannot both simultaneously represent 1
C) represents one or more monomers of formula II

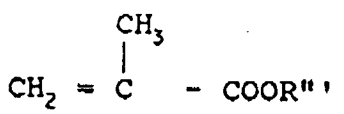

(II)

wherein R"' represents an optionally branched $C_{2-20}$ hydrocarbon group or a cyclic non-aromatic hydrocarbon group having up to 12 carbon atoms and at least 5 annular carbon atoms in amounts from 0 to 60 wt. %
D) represents styrene and/or $\alpha$-methylstyrene in amounts of from 0 to 40 wt. % and
E) represents 4-methylstyrene in amounts from 0 to 9.9 wt. %
F) represents optional additional comonomers the solubility of which does not exceed a level of 50 g of monomer per litre of water at 25 °C, and
G) represents optional additional comonomers which promote polymer cohesion.

**2.** A process according to claim 1, characterised in that the proportion of type B) monomers is from 5 to 40 wt. %.

**3.** A process according to claims 1 and 2, characterised in that the type B) monomer used is selected from the group comprising 2-phenoxyethyl methacrylate, benzyl methacrylate, 2-phenylethyl methacrylate and 3-phenylpropyl methacrylate.

**4.** A process according to claims 1 and 2, characterised in that they contain, in addition to the specified amounts of type A) monomers, at least 10 wt. % of type B) monomers and at least 10 wt. % of type C) monomers at the same time.

**5.** A process according to claim 1, characterised in that they contain, in addition to the specified amount of type A) monomers, at least 10 wt. % of type C) monomers and at least 5 wt. % of type D) monomers at the same time.

6. A process according to claims 1 and 2, characterised in that they contain, in addition to the specified amount of type A) monomer, at least 5 wt. % of type B) monomer, at least 5 wt. % of type C monomer and at least 5 wt. % of type D) monomer at the same time.

7. A process according to claims 5 and 6, characterised in that cyclohexyl methacrylate is used as the type C) comonomer.

8. A process according to claim 1, characterised in that the water absorption of the acrylic resin moulding composition under the conditions of DIN 50 015 does not exceed a value of 1.0 wt. %.

9. A process according to claim 1, characterised in that the acrylic resin moulding composition has a Vicat softening temperature according to DIN 53 460 of above 70 °C.

10. A process according to claim 1, characterised in that the acrylic resin moulding composition, in a thickness of 1 mm, has a light transmittance > 80%, preferably > 90% when irradiated with the light used for optical scanning.

**Revendications**

1. Procédé de fabrication de corps moulés en résine acrylique à faible pouvoir d'absorption d'eau, par extrusion, moulage par injection ou moulage par compression de masses à mouler de résine acrylique, caractérisé en ce que la masse à mouler de résine acrylique est un polymère qui est constitué par au moins trois groupes différents de comonomères choisis parmi les types A) à D) et éventuellement par d'autres monomères des types E) et/ou F) et/ou G), à savoir

A) du méthacrylate de méthyle dans des proportions de 20 à 85% en poids,

B) un ou plusieurs monomères de formule I

$$CH_2 = \overset{R'}{\overset{|}{C}} - COO - \underset{R''}{\underset{|}{(CH)_n}} - (O)_m - Ar \qquad I$$

dans laquelle

- R' est mis pour un atome d'hydrogène ou un reste méthyle,
- R" est mis pour un atome d'hydrogène ou un reste alkyle à 1-7 atomes de carbone,
- Ar est mis pour un hydrocarbure aromatique,
- n est un nombre de 1 à 6,
- m est mis pour 0 ou 1, étant spécifié que n et m ne peuvent pas être mis simultnément pour 1,

C) un ou plusieurs monomères de formule II

$$CH_2 = \overset{CH_3}{\overset{|}{C}} - COOR''' \qquad II$$

dans laquelle

- R"' est mis pour un reste hydrocarboné à 2-20 atomes de carbone éventuellement ramifié ou pour un reste hydrocarboné non aromatique cyclique renfermant jusqu'à 12 atomes de carbone et au moins 5 atomes de carbone dans le cycle,

dans des proportions de 0 à 60% en poids,

D) du styrène et/ou de l'$\alpha$-méthylstyrène dans des proportions de 0 à 40% en poids, et

E) du 4-méthylstyrène dans des proportions de 0 à 9,9% en poids,

F) éventuellement d'autres comonomères dont la solubilité ne dépasse pas la valeur de 50 g de monomère par litre d'eau à 25 °C, et

G) éventuellement d'autres comonomères qui renforcent la cohésion du polymère.

**2.** Procédé selon la revendication 1, caractérisé en ce que la part des monomères du type B) est de l'ordre de 5 à 40% en poids.

**3.** Procédé selon la revendication 1 ou 2, caractérisé en ce qu'on utilise, comme monomères du type B), des monomères du groupe du méthacrylate de 2-phénoxyéthyle, du méthacrylate de benzyle, du méthacrylate de 2-phényléthyle et du méthacrylate de 3-phénylpropyle.

**4.** Procédé selon la revendication 1 ou 2, caractérisé en ce qu'outre les quantités indiquées de monomère du type A), les polymères contiennent en même temps au moins 10% en poids de monomères du type B) et au moins 10% en poids de monomères du type C).

**5.** Procédé selon la revendication 1, caractérisé en ce qu'outre les quantités indiquées de monomère du type A), les polymères contiennent en même temps au moins 10% en poids de monomères du type C) et au moins 5% en poids de monomères du type D).

**6.** Procédé selon la revendication 1 ou 2, caractérisé en ce qu'outre les quantités indiquées de monomère du type A), les polymères contiennent en même temps au moins 5% en poids de monomères du type B), au moins 5% en poids de monomères du type C) et au moins 5% en poids de monomères du type D).

**7.** Procédé selon la revendication 5 ou 6, caractérisé en ce qu'on utilise, comme comonomère du type C), du méthacrylate de cyclohexyle.

**8.** Procédé selon la revendication 1, caractérisé en ce que l'absorption d'eau de la masse à mouler de résine acrylique ne dépasse pas la valeur de 1,0% en poids dans les conditions de la DIN 50 015.

**9.** Procédé selon la revendication 1, caractérisé en ce que la masse à mouler de résine acrylique a une température de ramollissement de Vicat selon la DIN 53 460 de plus de 70 °C.

**10.** Procédé selon la revendication 1, caractérisé en ce qu'en une épaisseur de couche de 1 mm, la masse à mouler de résine acrylique a une transparence de plus de 80%, de préférence de plus de 90%, à l'irradiation par la lumière utilisée dans la lecture optique.